# EUROPÄISCHE PATENTSCHRIFT

(11) **EP 2 962 606 B1**
(45) Veröffentlichungstag und Bekanntmachung des Hinweises auf die Patenterteilung: **14.06.2017**
(21) Anmeldenummer: 15173541.2
(22) Anmeldetag: 24.06.2015
(51) Int. Cl.: A47J 31/06, A47J 31/36, A47J 31/42

(54) **ELEKTRISCH BETRIEBENE KAFFEEMASCHINE MIT WAHLWEISER BENUTZUNG EINER EXTERNEN KAFFEEMÜHLE SOWIE ANORDNUNG AUS EINER SOLCHEN KAFFEEMASCHINE UND MINDESTENS EINER EXTERNEN MÜHLE**
ELECTRIC COFFEE MACHINE WITH OPTIONAL USE OF AN EXTERNAL COFFEE MILL AND ASSEMBLY COMPRISING SUCH A COFFEE MACHINE AND AT LEAST ONE EXTERNAL MILL
MACHINE À CAFÉ ÉLECTRIQUE POUVANT UTILISER SÉLECTIVEMENT UN MOULIN À CAFÉ EXTERNE ET AGENCEMENT D'UNE TELLE MACHINE À CAFÉ ET D'AU MOINS UN MOULIN À CAFÉ EXTERNE

(30) Priorität: 04.07.2014 DE 102014213078
(43) Veröffentlichungstag der Anmeldung: 06.01.2016
(73) Patentinhaber: WMF Group GmbH, 73312 Geislingen/Steige (DE)
(72) Erfinder: Göltenboth, Frank, 89134 Blaustein (DE)
(74) Vertreter: Pfenning, Meinig & Partner mbB

(56) Entgegenhaltungen:
- EP-B1- 0 997 093
- WO-A1-2011/140582
- CH-A1- 706 100
- DE-U1-202014 002 225

## Beschreibung

Die vorliegende Erfindung bezieht sich auf eine elektrisch betriebene Kaffeemaschine gemäß des Oberbegriffs aus Anspruch 1 sowie auf eine Anordnung umfassend eine solche Kaffeemaschine und mindestens eine externe Mühle.

Die CH 706 100 A1 beschreibt eine Kaffeemaschine mit Mahlwerk und abnehmbarem Siebträger sowie Verfahren zum Betrieb einer solchen Kaffeemaschine.

Die WO 2011/140582 beschreibt ein Verfahren und eine Vorrichtung für eine resultierende Strömung von einer Pumpe zu einem Überdruckventil. Das Verfahren umfasst die folgenden Schritte: Messen, mit einem ersten Durchflussmesser, einen Förderstrom zu der Pumpe, sowie Messen, mit einem zweiten Durchflussmesser den Rückfluss aus dem Überdruckventil. Daraus erfolgt eine Berechnung der resultierenden Strömung.

Die DE 20 2014 002 225 U1 beschreibt eine elektrisch betriebene Kaffeemaschine mit einem befüllbaren Siebträger. Der Siebträger ist als abnehmbarer, in einer Halterung am Gehäuse der Kaffeemaschine einsetzbarer Siebträgers ausgebildet. Es existieren mehrere am Siebträger und/oder an der Halterung ausgebildete Befestigungselemente, die zur Anwesenheitserkennung des Siebträgers und/oder zum Erkennen der Art des eingesetzten Siebträgers ausgebildet sind.

Die EP 0 997 093 B1 beschreibt ein Milchaufschäumungs- und Erhitzungssystem. Dieses System kann mit vorgemahlenem Kaffee aufbrühen oder auch mit Kaffeemehl, das durch eine Mühle, die im System vorhanden ist, erzeugt wurde.

Für unterschiedliche Kaffeeprodukte werden verschiedene Kaffeesorten und Mahlungen benötigt. So werden für einen Espresso Bohnen mit dunkler Röstung und einem sehr feinen Mahlgrad verwendet, für einen Cafe Creme kommen jedoch Bohnen mit hellerer Röstung und einem nicht so feinen Mahlgrad zum Einsatz. Darüber hinaus gibt es weitere Sorten wie Filterkaffee oder entkoffeinierten Kaffee, die ebenfalls verarbeitet werden sollen.

Vollautomaten haben eine begrenzte Anzahl von in der Kaffeemaschine integrierten Kaffeemühlen (in der Regel eine Mühle oder maximal zwei Mühlen, in speziellen Ausführungen auch bis zu vier Mühlen).

Halbautomaten haben keine integrierte Kaffeemühle. Hier wird das Kaffeemehl immer durch den Bediener entsprechend dem gewünschten Kaffeeprodukt manuell oder über eine separate, vom Halbautomaten getrennte Mühle in den Siebträger des Halbautomaten dosiert. Das Produkt wird dann nach dem Einhängen des Siebträgers in den Halbautomaten durch den Bediener manuell ausgelöst.

Aus dem Stand der Technik ist zudem eine Kaffeemaschine bekannt (vgl. CH 706 100 A1), die den Kaffee in einem Siebträger brüht (wie die Halbautomaten). Hierbei wird aber das Kaffeemehl dem Siebträger nicht manuell zugeführt, sondern die Mehlzufuhr erfolgt durch entsprechende Produktanwahl bei eingehängtem Siebträger automatisch durch eine integrierte Kaffeemühle wie bei einem Vollautomaten. Die Kaffeemaschine weist dabei einen automatischen Verschlussmechanismus für den Siebträger auf.

Ausgehend vom Stand der Technik ist die Aufgabe der vorliegenden Erfindung, Kaffeemaschinen wie die in der CH 706 100 A1 beschriebene, elektrisch betriebene Kaffeemaschine so zu verbessern, dass diese auf einfache und bedienerfreundliche Art und Weise die Verwendung einer Vielzahl unterschiedlicher Kaffeebohnensorten erlauben.

Diese Aufgabe wird durch die elektrisch betrieben Kaffeemaschine gemäß Anspruch 1 sowie die Anordnung umfassend eine solche Kaffeemaschine gemäß Anspruch 7 gelöst. Vorteilhafte Ausgestaltungsvarianten lassen sich den abhängigen Ansprüchen entnehmen.

Nachfolgend wird die Erfindung zunächst allgemein, dann anhand eines spezifischen Ausführungsbeispiels beschrieben. Das spezifische Ausführungsbeispiel geht dabei grundsätzlich von der Konstruktion der in der CH 706 100 A1 gezeigten elektrisch betriebenen Kaffeemaschine aus, so dass hiermit die gesamte Offenbarung der CH 706 100 A1 in die Offenbarung der vorliegenden Erfindung mit einbezogen wird. In dem sich anschließenden Ausführungsbeispiel der vorliegenden Erfindung werden somit vor allen Dingen die konstruktiven Unterschiede und Ergänzungen zu der in der CH 706 100 A1 gezeigten Kaffeemaschine beschrieben. Dabei müssen die in diesem Ausführungsbeispiel in Kombination miteinander verwirklichten Erfindungsmerkmale im Rahmen des durch die Patentansprüche vorgegebenen Schutzumfangs nicht genau in der im Ausführungsbeispiel gezeigten Kombination verwirklicht sein, sondern können auch auf andere Art und Weise kombiniert werden. Insbesondere können einzelne der gezeigten Merkmale auch weggelassen werden, mit anderen gezeigten Merkmalen auch auf andere Art und Weise kombiniert werden und jeweils bereits für sich eine Verbesserung des Standes der Technik darstellen.

Eine erfindungsgemäße Kaffeemaschine beschreibt Anspruch 1.

Der grundsätzliche Aufbau folgt dabei der CH 706 100 A1 (Oberbegriff aus Anspruch 1) und wird gemäß des kennzeichnenden Teils des Anspruchs 1 weitergebildet. In das Gehäuse integriert muss dabei nicht heißen, dass alle Bauteile der internen Kaffeemühle im Inneren des Gehäuses angeordnet sind. So kann beispielsweise der Kaffeebohnenbehälter auch zumindest teilweise au-ßerhalb des Gehäuses (z.B. oberhalb des Oberteils des Gehäuses der Kaffeemaschine) positioniert sein. Die Steuereinrichtung (nachfolgend alternativ auch als Steuereinheit bezeichnet) entspricht der zentralen Steuerung der CH 706 100 A1.

Erste vorteilhafterweise realisierbare Merkmale lassen sich dem abhängigen Anspruch 2 entnehmen.

Das Feststellen des Befüllzustands des Siebträgers geschieht dabei in der Regel mithilfe der Steuereinrichtung, ggfs. auf Basis weiterer Bauelemente (insbesondere eines Sensors, vgl. nachfolgend; dabei kann eine vorhandene Sensorik der Kaffeemaschine genutzt werden). Das Auslösen geschieht bevorzugt nach dem Einrasten des Siebträgers (also dem Beenden des Einsetzvorgangs des Siebträgers) und nach dem Erfassen des Befüllzustands des Siebträgers automatisch über entsprechende Steuersignale der Steuereinrichtung an die Brühgruppe der Kaffeemaschine. Auch ist es möglich, die Brühung über Drücken einer Produkttaste an der Kaffeemaschine auszulösen.

Weitere vorteilhafterweise realisierbare Merkmale lassen sich dem abhängigen Anspruch 3 entnehmen.

Der Sensor ist in der Regel mit der Steuereinrichtung verbunden, die dann auf Basis der vom Sensor übermittelten Messsignale den entsprechenden Brühvorgang mit bzw. ohne Betätigung der in der Kaffeemaschine eingebauten Kaffeemühle auslöst. Ein solcher Sensor kann z.B. ein Ultraschallsensor sein. Der Sensor kann jedoch auch auf einfache Art und Weise mit Hilfe von in der Kaffeemaschine bereits vorhandenen Bauteilen realisiert werden: So kann eine Weg- und Stromerfassung für das Presselement (siehe nachfolgend) vorhanden sein. Fährt das Presselement in den Siebträger ein und trifft dort auf Kaffeemehl, so wird wegen der zunehmenden Presskraft ein Stromanstieg festgestellt. Abhängig vom durch das Presselement beim Einfahren bereits zurückgelegten Weg (bzw. der momentanen Position des Presselements) ergibt sich, ob der Siebträger mit Kaffeemehl befüllt ist, oder nicht.

Es ist jedoch nicht notwendig, einen solchen Sensor vorzusehen: Er kann auch weggelassen werden, wenn ein Benutzer über eine Benutzerschnittstelle, z.B. über ein geeignetes Bedienfeld einer Bedieneinheit, die am Gehäuse der erfindungsgemäßen Maschine realisiert ist, anwählt, ob der Brühvorgang mit oder ohne Betätigung der in die Maschine integrierten Mühle ausgelöst werden soll (ob also ein mit Kaffeemehl befüllter oder ein nicht-befüllter Siebträger eingesetzt worden ist). Bei einer solchen Bedieneinheit kann es sich erfindungsgemäß um einen berührungsempfindlichen Bildschirm (Touchscreen) am Gehäuse der Maschine handeln.

Weitere vorteilhafterweise realisierbare Merkmale lassen sich Anspruch 4 entnehmen.

Die Steuereinheit kann dabei z.B. basierend auf Berührungen eines Benutzers von der Benutzerschnittstelle generierter Eingabesignale der Benutzerschnittstelle entgegennehmen und darauf basierend den Brühvorgang entsprechend der entgegengenommenen Signale entweder mit oder ohne Betätigung der integrierten Kaffeemühle der Maschine (also entweder mit oder ohne Mahlvorgang in der in die Maschine integrierten Kaffeemühle) steuern.

Weitere vorteilhafterweise realisierbare Merkmale lassen sich dem abhängigen Anspruch 5 entnehmen.

Das Eingeben oder das Auswählen der Mahl- oder Brühparameter kann dabei auch indirekt erfolgen, d.h. es wird ein Produkt (z.B. Milchkaffee oder Espresso) eingegeben oder ausgewählt, anhand dessen dann von der Kaffeemaschine die zu diesem Produkt gehörenden Mahlparameter und/oder Brühparameter eingestellt werden. Insbesondere kann auch eine Eingabe oder Auswahl von Mahlparametern wie z.B. Bohnensorte, Mehlmenge (bzw. Mehlvolumen) und Mahlgrad erfolgen und anhand dieser Mahlparameter kann das Kaffeerezept mit seinen für diese Mahlparameter geeigneten Brühparameter wie z.B. Brühtemperatur und Brühwassermenge festgelegt werden.

Der Brühvorgang kann also gemäß der ausgewählten Mahlparameter und/oder der ausgewählten Brühparameter oder anhand des gemäß des externen Mühlentyps ausgewählten Satzes von Mahl- und/oder Brühparametern von der Steuereinrichtung gesteuert werden.

Weitere vorteilhafterweise realisierbare Merkmale lassen sich Anspruch 6 entnehmen.

Es ist somit eine Steuerung des Verpressens (auch als "Tampern" des Kaffeemehls bezeichnet) auf unterschiedliche Art und Weise möglich: Ist über die Steuervorrichtung derjenige Modus gewählt bzw. bestimmt, in dem der Brühvorgang ohne vorherige Betätigung der internen Kaffeemühle erfolgt, so kann entweder lediglich das Mahlen des Kaffeemehls extern (also in einer externen Mühle) vorgenommen werden, so dass das Verpressen (Tampern) des extern gemahlenen Kaffeemehls nach Einsetzen des Siebträgers intern (also durch das Presselement der Kaffeemaschine selbst) erfolgt. Andererseits ist aber auch ein Modus möglich, bei dem sowohl das Mahlen (durch die externe Mühle), als auch das Verpressen des Kaffeemehls im noch nicht in die Maschine eingesetzten Siebträger extern erfolgen (z.B. Handverpressen des Kaffeemehls). In letzterem Fall kann die erfindungsgemäße Kaffeemaschine in einem Halbautomatenmodus (Baristamodus) betrieben werden, d.h. sowohl das Mahlen als auch das Tampern übernimmt der Benutzer selber und die erfindungsgemäße Kaffeemaschine verschließt nach Einhängen des Siebträgers letzteren lediglich mit einer festen Position des Presselementes (oberer Kolben mit Verteilsieb) und brüht anschließend den Kaffee auf.

Die je nach eingestelltem Brühvorgang jeweils intern in der Maschine durchzuführenden Schritte werden durch die Steuereinrichtung festgelegt, die dann die entsprechenden Bauteile der erfindungsgemäßen Kaffeemaschine ansteuert. Das Presselement entspricht dabei dem Verteilsiebelement bzw. Kolben des in der CH 706 100 A1 geschilderten Aufbaus.

Derjenige Modus, bei dem die Maschine (nach dem externen Mahlen) intern auch das Verpressen des Kaffeemehls übernimmt, ist insbesondere vorteilhaft, wenn unerfahrenes Personal die Maschine bedienen soll: Wird das Verpressen extern durchgeführt, so muss darauf geachtet werden, dass der Kaffeemehlkuchen nicht mit zu geringen Presskräften verpresst wird (ansonsten fließt das Brühwasser zu schnell durch das Kaffeemehl und führt zur Unterextraktion: es fehlen dann Aromastoffe und Öle im aufgebrühten Kaffee, wodurch dieser fad schmeckt und ohne Körper und Crema ist), andererseits jedoch auch nicht zu stark verpresst wird (ansonsten ergeben sich zu geringe Fließgeschwindigkeiten des Brühwassers; es kommt zur Überextraktion und es werden unerwünschte Stoffe wie Z.B. Bitterstoffe oder Gerbsäuren gelöst, wodurch der Kaffee zu kräftig und bitter schmeckt und eine zu dunkle Crema entsteht).

Eine erfindungsgemäße Anordnung beschreibt Anspruch 7.

Dabei sind die Mahlparameter und/oder die Brühparameter an einer solchen externen Mühle vorzugsweise mittels eines Sensors erfassbar und/oder rechnergestützt berechenbar. So können diese Parameter beispielsweise eine tatsächlich von der externen Mühle gemahlene Kaffeemehlmenge und daraus abgeleitet weitere Parameter wie die Brühtemperatur, die Brühdauer, ... umfassen. Alternativ oder in Kombination damit können solche Parameter auch durch einen Benutzer über eine Benutzerschnittstelle der externen Mühle und/oder über eine Benutzerschnittstelle der Kaffeemaschine (z.B. Eingabe von Bohnensorte, Mahlmenge bzw. -volumen und Mahlgrad) festgelegt werden. So kann beispielsweise ein Benutzer die Brühtemperatur und die Brühdauer anhand der von ihm gemahlenen und nach dem Mahlen abgeschätzten Mehlmenge manuell festlegen. Die Parameter werden dann jeweils dem Siebträger übermittelt. Bei den Parametern handelt es sich vorzugsweise um die vorangehend bereits beschriebenen Mahlparameter und/oder Brühparameter.

Beispielsweise kann am Siebträger ein RFID-Transponder angebracht sein, in dessen Chip die externe Kaffeemühle die für den Brühvorgang mit der in der externen Mühle befindlichen Bohnensorte notwendigen oder vorteilhaften Parameter einschreiben kann. Die Kaffeemaschine kann dann ein entsprechendes RFID-Lesegerät aufweisen, das nach dem Einsetzen des Siebträgers die einbeschriebenen Parameter aus dem Chip ausliest und der Steuereinrichtung übermittelt, so dass letztere den Brühvorgang gemäß der übermittelten Parameter steuern kann.

Ebenso kann auch eine direkte Übermittlung von der externen Mühle an die Kaffeemaschine (also ohne Zwischenschalten des Siebträgers) erfolgen, beispielsweise per WLAN (sofern Mühle wie Kaffeemaschine jeweils einen geeigneten Sender-Empfänger aufweisen) oder ebenfalls per RFID, wenn die externe Mühle einen RFID-Chip aufweist, dem die zu verwendenden Parameter einbeschrieben werden bzw. worden sind, und sich dieser Chip im Wechselfeld des Lesegerätes der Kaffeemaschine befindet.

Erfindungsgemäß wird dem Benutzer der Kaffeemaschine somit die Möglichkeit zur Verfügung gestellt, andere Bohnensorten zu verwenden als diejenige Bohnensorte, die er standardmäßig in der/den Mühle(n), die in die Kaffeemaschine integriert ist/sind, verarbeitet. Somit wird die Arbeit, die mit dem Wechsel der Bohnensorte bei einer internen Mühle verbunden ist, vermieden.

Bei den eingesetzten externen Mühlen kann es sich um handelsübliche Mühlen handeln, z.B. mit Scheiben- oder Kegelmahlwerk. Bei solchen Mühlen ist der Mahlgrad manuell oder elektrisch verstellbar. Die Dosiermenge kann der Benutzer selbst durch Ein- und Ausschalten der Mühle an einem Bedienelement bestimmen. Oder es ist an der externen Mühle eine Dosiermenge einstellbar, die z.B. von 5g bis 15g reichen kann.

Der Benutzer nimmt somit den Siebträger der erfindungsgemäßen Maschine, hält diesen unter den Mühlenauslauf der externen Mühle und löst die Mahlung an der externen Mühle aus. Danach wird der Siebträger in die Kaffeemaschine eingehängt. Anschließend kann beispielsweise an einem Bedienfeld der Kaffeemaschine die entsprechende Produkttaste betätigt werden. Der Benutzer kann somit extern gemahlenen Kaffee im Siebträger der Maschine intern verarbeiten.

Der Kaffeemaschine können durch den Bediener die Mahlmenge und der Mahlgrad mitgeteilt werden, um Brühparameter (wie beispielsweise auch die Position des oberen Brühkolbens, eine Verpresskraft, die Brühwassertemperatur, die Brühwassermenge, ...) anzupassen. Dies kann durch direkte Eingabe durch den Benutzer erfolgen oder auch durch das Hinterlegen der Brühparameter in der Steuereinrichtung und das Aufrufen der entsprechenden Parameter durch Typenwahl der externen Mühle.

Der Benutzer kann somit eine unbegrenzte Anzahl zusätzlicher, externer Mühlen parallel zu der/den in der Maschine integrierten Mühle(n) verwenden. Hierzu kann die erfindungsgemäße Kaffeemaschine zusätzlich zur Produktauswahl eine Auswahlmöglichkeit für eine oder mehrere externe Mühle(n) anbieten. Die Benutzung der externen Mühlen ist mit einer Vielzahl von Möglichkeiten realisierbar (einfach, komfortabel, benutzerfreundlich, ...). So kann eine externe Mühle angewählt werden und der Bediener kann eigenverantwortlich Bohnensorte, Mahlmenge und Mahlgrad für das von ihm gewünschte Produkt bestimmen. Der Bediener kann an einer Benutzerschnittstelle der Kaffeemaschine die Bohnensorte, die Mahlmenge oder den Mahlgrad eingeben und quittieren. Die Kaffeemaschine kann dabei Fehler (wie beispielsweise zu große, zu kleine Mehlmenge) abfangen und anzeigen. Ebenso kann eine externe Mühle vordefinierter Art an einer Benutzerschnittstelle der Kaffeemaschine ausgewählt werden, dabei sind dann entsprechende Brühparameter bzw. Prozessparameter des Brühvorgangs in der Maschinensteuerung hinterlegt. Eine externe Mühle kann Informationen wie beispielsweise Mahlparameter und/oder Brühparameter an die Kaffeemaschine übertragen. Die Übertragung kann elektronisch oder auch optisch oder über eine drahtgebundene oder drahtlose Verbindung erfolgen.

In Verbindung mit der vorliegenden Erfindung kann zusätzlich auch abgepacktes, bereits gemahlenes Kaffeemehl verwendet werden. Auch ist zusätzlich der Einsatz eines Kaffeemehlportionierers oder eines Kaffeemehldosierers möglich. Ebenfalls ist der Einsatz spezieller Siebträger, mit denen Kaffeekapseln, Pads oder Cartridges verarbeitet werden können, denkbar.

Erfindungsgemäß ist somit eine vergrößerte Produktvielfalt gegeben, die erfindungsgemäße Maschine kann sowohl ungemahlene Kaffeebohnen verwenden, als auch bereits gemahlenes Kaffeemehl. Insbesondere wenn eine Benutzerschnittstelle vorhanden ist, über die ein Brühvorgang ohne vorherige Betätigung der Kaffeemühle (5) angewählt werden kann, kann der Benutzer frei entscheiden, mit welchen und mit wievielen zusätzlichen Kaffeemühlen er arbeiten will.

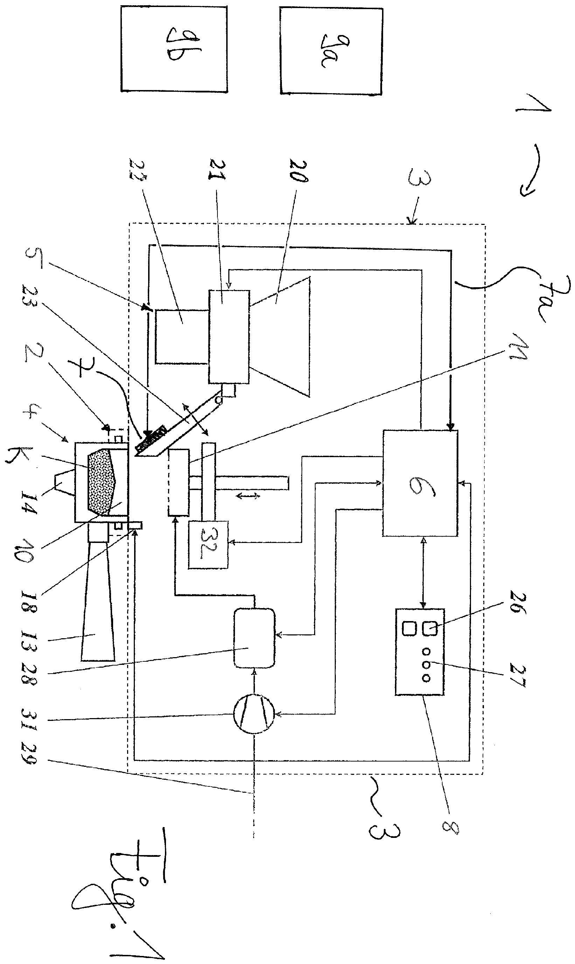

Figur 1 zeigt ein Beispiel für eine erfindungsgemäße, elektrisch betriebene Kaffeemaschine als Weiterbildung der in der CH 706 100 A1 beschriebenen Maschine.

Im Gehäuse 3 dieser Kaffeemaschine 1 befindet sich eine einzelne, integrierte Kaffeemühle 5 mit ihrem Antriebsmotor 22, ihrem Mahlwerk 21 und ihrem über das Gehäuse 3 zugänglichen (hier nicht gezeigt) Bohnenbehälter 20. Das intern mit der Mühle 5 gemahlene Kaffeemehl wird über eine Schütte 23 in den in die Halterung 2 am Gehäuse 3 eingesetzten, leeren (also nicht bereits extern mit Kaffeemehl befüllten) Siebträger 4 verbracht. Figur 1 zeigt den Siebträger 4 im (extern oder intern) mit Kaffeemehl K befüllten Zustand (14 stellt die Auslauföffnung des Siebträgers dar, 13 den Handgriff desselben).

11 zeigt das Verteilersieb-Element bzw. den Kolben der Kaffeemaschine 1, das/der als Presselement zum Verschließen der vom eingesetzten Siebträger 4 und dem Verteilersieb-Element 11 ausgebildeten Brühkammer 10 der Kaffeemaschine 1 dient. Wie bereits beschrieben, kann wahlweise mit dem Presselement 11 ausschließlich ein Verschließen der Brühkammer 10 (wenn das im eingesetzten Siebträger 4 befindliche Kaffeemehl K bereits extern, in der Regel manuell verpresst worden ist) erfolgen oder auch sowohl ein Verpressen des Kaffeemehls K im eingesetzten Siebträger 4 als auch ein Verschließen der Brühkammer 10, jeweils für den anschließenden Brühvorgang, erfolgen. Hierzu wird das Presselement 11 (vgl. Pfeile) mittels der Antriebseinheit 32 für das Presselement 11 in den eingesetzten Siebträger 4 hinein verfahren (aus der in Figur 1 gezeigten, geöffneten Position der Brühkammer 10 nach unten verfahren).

Wie in der CH 706 100 A1 beschrieben, wird Wasser über den Kaltwasseranschluss 29 der Maschine mittels der Pumpe 31 bei vorbestimmtem Druck zum Heißwasserbereiter 28 der Maschine geleitet und von dort über das obere Verteilersieb des Presselementes 11 in die bereits verschlossene (hier nicht gezeigt) Brühkammer 10.

Die Maschine weist eine einen Mikrocontroller umfassende Steuereinrichtung bzw. zentrale Steuerung 6 auf. Diese ist über eine bidirektionale Daten- und Steuerleitung mit einer Siebträger-Verriegelung 18 verbunden. Die Verriegelung 18 verhindert im aktivierten Zustand, dass der Siebträger 4 aus der Halterung 2 entnommen werden kann. Die Verriegelung 18 wird deaktiviert (gelöst) wenn der Brühvorgang beendet ist und der Siebträger wieder entnommen werden kann. Eine solche Verriegelung ist jedoch nicht unbedingt notwendig: Durch den hohen Druck (z.B. 8 bar) beim Brühen sitzt der Siebträger so fest in seiner Halterung, dass er praktisch nicht bzw. nur mit erheblichem Kraftaufwand entnommen werden kann.

Des weiteren ist die Steuereinrichtung 6 über eine bidirektionale Daten- und Steuerleitung mit einer einen berührungsempfindlichen Bildschirm am Gehäuse 3 der Maschine 1 umfassenden Benutzerschnittstelle 8 verbunden. Über angezeigte Bedienelemente 26 kann durch Berühren dieser Elemente 26 z.B. mittels seines Fingers ein Benutzer wie bereits beschrieben eine Getränkesorte, einen Typ von externer Mühle und/oder einzelne Brühparameter auswählen bzw. festlegen. Eine entsprechende optische Anzeige 27 zeigt an, was ausgewählt bzw. eingestellt worden ist. Gemäß der eingegebenen, von der Schnittstelle 8 zur Einheit 6 übermittelten Parameter steuert die Einheit 6 den Brühvorgang bzw. die Elemente 31, 28, 32, 18, 5 und 23 und 7.

An dem dem Presselement 11 bzw. dem eingesetzten Siebträger 4 zugewandten Ende der Schütte 23 ist diese mit einem Ultraschallsensor 7 versehen. Dieser Sensor 7 ist über eine bidirektionale Daten- und Steuerleitung 7a mit der Steuereinrichtung 6 verbunden. Der Sensor 7 ist so ausgerichtet und positioniert, dass er nach Einsetzen des Siebträgers 4 in die Halterung 2 dessen Innenraum abzutasten vermag. Somit kann über die vom Sensor 7 empfangenen und an die Steuereinrichtung 6 weitergeleiteten Ultraschallsignale festgestellt werden, ob der eingesetzte Siebträger 4 bereits mit Kaffeemehl K befüllt ist (also die interne Mühle 5 nicht betätigt werden soll) oder nicht (also vor dem eigentlichen Brühvorgang erst die entsprechende Kaffeemehlmenge durch die interne Mühle 5 gemahlen und über die Schütte 23 dem Siebträger 4 zugeführt werden muss).

Wie bereits beschrieben, kann der Sensor auch auf andere Art und Weise ausgebildet werden oder auch weggelassen werden.

Die Bezugszeichen 9a und 9b deuten zwei externe Mühlen an, über die der Siebträger 4 der Maschine 1 vor seinem Einsetzen mit gemahlenem Kaffeemehl K unterschiedlicher Kaffeebohnensorten befüllt werden kann.

## Patentansprüche

1. Elektrisch betriebene Kaffeemaschine (1) mit
mindestens einem abnehmbaren, für den Brühvorgang in eine Halterung (2) am Gehäuse (3) der Kaffeemaschine (1) einsetzbaren Siebträger (4),
einer in das Gehäuse (3) integrierten Kaffeemühle (5), deren Mahlgut in den eingesetzten Siebträger (4) einbringbar ist, und
einer die Kaffeemühle (5) und den Brühvorgang steuernden Steuereinrichtung (6),
***dadurch gekennzeichnet, dass***
bei eingesetztem Siebträger (4) mittels der Steuereinrichtung (6) wahlweise entweder ein Brühvorgang ohne vorherige Betätigung der Kaffeemühle (5) oder ein Brühvorgang mit vorheriger Betätigung der Kaffeemühle (5) durchführbar ist, und
dass die Kaffeemaschine feststellt, ob der eingesetzte Siebträger (4) mit Kaffeemehl befüllt ist oder nicht, wobei im Fall eines befüllten eingesetzten Siebträgers (4) ein Brühvorgang ohne vorherige Betätigung der Kaffeemühle (5) auslösbar ist und im Fall eines unbefüllt eingesetzten Siebträgers (4) ein Brühvorgang mit vorheriger Betätigung der Kaffeemühle (5) auslösbar ist.

2. Kaffeemaschine (1) nach dem vorhergehenden Anspruch
***gekennzeichnet, durch***
einen Sensor (7) zu besagter Feststellung.

3. Kaffeemaschine (1) nach einem der vorhergehenden Ansprüche
***gekennzeichnet durch***
eine Benutzerschnittstelle (8), insbesondere ein am Gehäuse (3) ausgebildetes Bedienfeld, über die/das entweder der Brühvorgang ohne vorherige Betätigung der Kaffeemühle (5) oder der Brühvorgang mit vorheriger Betätigung der Kaffeemühle (5) manuell **durch** einen Benutzer der Kaffeemaschine auswählbar ist.

4. Kaffeemaschine (1) nach dem vorhergehenden Anspruch
***dadurch gekennzeichnet, dass***
über die Benutzerschnittstelle (8) ein oder mehrere Mahlparameter und/oder ein oder mehrere Brühparameter, insbesondere ein Brühdruck, ein Brühdruckverlauf über die Zeit, eine Brühtemperatur, ein Brühtemperaturverlauf über die Zeit, eine Bohnensorte, ein Mehlvolumen an gemahlenem Kaffeemehl und/oder ein Mahlgrad für gemahlenes Kaffeemehl, manuell eingebbar und/oder aus einer in einem Speicher der Kaffeemaschine abgespeicherten, vorbestimmten Parametermenge auswählbar ist/sind
und/oder
dass über die Benutzerschnittstelle (8) ein Typ einer externen Mühle oder mehrere verschiedene Typ von externen Mühlen (9a, 9b) anwählbar ist/sind, wobei nach der Anwahl eines Mühlentyps durch den Benutzer der Brühvorgang auf Basis eines zu diesem Mühlentyp gehörigen, in einem/dem Speicher der Kaffeemaschine abgelegten Satzes von Mahlparametern und/oder Brühparametern steuerbar ist.

5. Kaffeemaschine (1) nach einem der vorhergehenden Ansprüche
***gekennzeichnet durch***
ein zum Verpressen von im Siebträger (4) befindlichen Kaffeemehl (K) und zum Verschließen der Brühkammer (10) der Kaffeemaschine in den eingesetzten Siebträger (4) einfahrbares und während des oder nach dem Brühvorgang(s) aus dem Siebträger wieder herausfahrbares Presselement (11),
wobei im Fall des Durchführens des Brühvorgangs ohne vorherige Betätigung der Kaffeemühle (5) vor dem Hindurchleiten von Wasser unter Druck **durch** die Brühkammer (10) mittels der Steuereinrichtung (6) wahlweise entweder die Brühkammer (10) mittels des Presselementes (11) lediglich verschließbar ist, ohne dass es zuvor zu einem Verpressen von im Siebträger (4) befindlichen Kaffeemehl kommt, oder mittels des Presselementes (11) im Siebträger (4) befindliches Kaffeemehl verpressbar ist und die Brühkammer (10) verschließbar ist.

6. Anordnung umfassend eine Kaffeemaschine (1) nach einem der vorhergehenden Ansprüche sowie eine oder mehrere externe Mühle(n) (9a, 9b),
***dadurch gekennzeichnet, dass***
mindestens eine der externen Mühlen (9a, 9b), bevorzugt alle externen Mühlen (9a, 9b), einem in einer solchen externen Mühle (9a, 9b) mit Kaffeemehl befüllten oder zu befüllenden Siebträger (4) der Kaffeemaschine (1) einen oder mehrere Mahlparameter und/oder einen oder mehrere Brühparameter übermittelt/n, und
dass die Kaffeemaschine (1) diese(n) Mahlparameter und/oder Brühparameter von diesem extern befüllten Siebträger übernimmt, bevorzugt aus diesem extern befüllten Siebträger ausliest, und mittels ihrer Steuereinrichtung (6) einen Brühvorgang unter Berücksichtigung dieses/r Mahlparameter(s) und/oder Brühparameter(s) durchführt.

## Claims

1. An electrically operated coffee machine (1), with
at least one removable filter holder (4), which can be inserted into a holding means (2) on the housing (3) of the coffee machine (1) for the brewing operation,
a coffee grinder (5) integrated in the housing (3), the grinding material of which can be introduced into the inserted filter holder (4), and
a control means (6) which controls the coffee grinder (5) and the brewing operation, **characterised in that**
when the filter holder (4) is inserted, optionally either a brewing operation without prior actuation of the coffee grinder (5) or a brewing operation with prior actuation of the coffee grinder (5) can be carried out by means of the control means (6), and
**in that** the coffee machine determines whether the inserted filter holder (4) is filled with coffee grounds or not, with in the case of a filled inserted filter holder (4) a brewing operation without prior actuation of the coffee grinder (5) being able to be triggered and in the case of a filter holder (4) inserted unfilled a brewing operation with prior actuation of the coffee grinder (5) being able to be triggered.

2. A coffee machine (1) according to the preceding claim,
**characterised by**
a sensor (7) for said determination.

3. A coffee machine (1) according to one of the preceding claims
**characterised by**
a user interface (8), in particular an operator panel formed on the housing (3), via which either the brewing operation without prior actuation of the coffee grinder (5) or the brewing operation with prior actuation of the coffee grinder (5) can be selected manually by a user of the coffee machine.

4. A coffee machine (1) according to the preceding claim,
**characterised in that**
one or more grinding parameters and/or one or more brewing parameters, in particular a brewing pressure, a brewing pressure profile over time, a brewing temperature, a brewing temperature profile over time, a bean type, a volume of ground coffee grounds and/or a degree of grinding for ground coffee grounds, can be input manually and/or selected from a predetermined parameter amount stored in a memory of the coffee machine via the user interface (8)
and/or
**in that** a type of an external grinder or a plurality of different types of external grinders (9a, 9b) can be selected via the user interface (8), with, once a grinder type has been selected by the user, the brewing operation being controllable on the basis of a set of grinding parameters and/or brewing parameters associated with this grinder type and placed in a/the memory of the coffee machine.

5. A coffee machine (1) according to one of the preceding claims,
**characterised by**
a pressing element (11) which can be moved into the inserted filter holder (4) and can be moved out of the filter holder again during or after the brewing operation for pressing coffee grounds (K) located in the filter holder (4) and for closing the brewing chamber (10) of the coffee machine,
wherein in the event of the brewing operation being carried out without prior actuation of the coffee grinder (5) before water is passed under pressure through the brewing chamber (10), by means of the control means (6) optionally either the brewing chamber (10) can merely be closed by means of the pressing element (11) without pressing of coffee grounds located in the filter holder (4) occurring beforehand, or by means of the pressing element (11) coffee grounds located in the filter holder (4) can be pressed and the brewing chamber (10) can be closed.

6. An arrangement comprising a coffee machine (1) according to one of the preceding claims and also one or more external grinder(s) (9a, 9b),
**characterised in that**
at least one of the external grinders (9a, 9b), preferably all of the external grinders (9a, 9b), transmit(s) one or more grinding parameters and/or one or more brewing parameters to a filter holder (4) of the coffee machine (1) which is filled or to be filled with coffee grounds in such an external grinder (9a, 9b), and
**in that** the coffee machine (1) takes over this/these grinding parameter(s) and/or brewing parameter(s) from this externally filled filter holder, preferably selects it/them from this externally filled filter holder, and by means of its control means (6) carries out a brewing operation taking into account this/these grinding parameter(s) and/or brewing parameter(s).

## Revendications

1. Machine à café (1) à fonctionnement électrique avec
au moins un porte-filtre (4) amovible pouvant être introduit pour le processus de préparation dans un support (2) sur le carter (3) de la machine à café (1),
un moulin à café (5) intégré dans le carter (3), dont le produit broyé peut être mis en place dans le porte-filtre (4) introduit, et
un dispositif de commande (6) commandant le moulin à café (5) et le processus de préparation,
***caractérisée en ce que**,*
quand le porte-filtre (4) est introduit, au moyen du dispositif de commande (6), il peut être réalisé au choix, soit un processus de préparation sans actionnement préalable du moulin à café (5), soit un processus de préparation avec un actionnement préalable du moulin à café (5), et
**en ce que** la machine à café constate si le porte-filtre (4) introduit est rempli ou non de café moulu et, si le porte-filtre (4) introduit est rempli, un processus de préparation peut être déclenché sans actionnement préalable du moulin à café (5) et, si le porte-filtre (4) introduit est non rempli, un processus de préparation peut être déclenché avec un actionnement préalable du moulin à café (5).

2. Machine à café (1) selon la revendication précédente,
***caractérisée par***
un capteur (7) destiné à effectuer ladite constatation.

3. Machine à café (1) selon l'une des revendications précédentes,
***caractérisée par***
une interface utilisateur (8), en particulier un panneau de commande conçu sur le carter (3), par le biais de laquelle/duquel, soit le processus de préparation sans actionnement préalable du moulin à café (5), soit le processus de préparation avec un actionnement préalable du moulin à café (5) peut être sélectionné manuellement par un utilisateur de la machine à café.

4. Machine à café (1) selon la revendication précédente,
***caractérisée en* ce *que****,*
par le biais de l'interface utilisateur (8), un ou plusieurs paramètres de broyage et/ou un ou plusieurs paramètres de préparation, en particulier une pression de préparation, une courbe de pression de préparation en fonction de la durée, une température de préparation, une courbe de température de préparation en fonction de la durée, une espèce de grains, un volume moulu de mouture de café moulue et/ou un degré de broyage pour la mouture de café moulue, peut/peuvent être entré(s) manuellement et/ou peut/peuvent être sélectionné(s) parmi une quantité de paramètres prédéfinis enregistrée dans une mémoire de la machine à café
et/ou
**en ce que**, par le biais de l'interface utilisateur (8), un type de moulin externe ou plusieurs types différents de moulins externes (9a, 9b) peut/peuvent être choisi(s), le processus de préparation pouvant, après le choix d'un type de moulin par l'utilisateur, être commandé sur la base d'un jeu de paramètres de broyage et/ou de paramètres de préparation appartenant à ce type de moulin et stockés dans une/la mémoire de la machine à café.

5. Machine à café (1) selon l'une des revendications précédentes,
***caractérisée par***
un élément de pression (11) pouvant être rentré dans le porte-filtre (4) introduit pour le pressage de la mouture de café (K) présente dans le porte-filtre (4) et pour la fermeture de la chambre de préparation (10) de la machine à café et pouvant être ressorti du porte-filtre pendant ou après le processus de préparation,
dans laquelle, en cas de réalisation du processus de préparation sans actionnement préalable du moulin à café (5) avant l'introduction d'eau sous pression dans la chambre de préparation (10), au moyen du dispositif de commande (6), au choix, soit la chambre de préparation (10) est simplement fermée au moyen de l'élément de pression (11) sans que cela conduise préalablement à un pressage de la mouture de café présente dans le porte-filtre (4), soit la mouture de café présente dans le porte-filtre (4) peut être pressée au moyen de l'élément de pression (11) et la chambre de préparation (10) peut être fermée.

6. Agencement comprenant une machine à café (1) selon l'une des revendications précédentes, ainsi qu'un ou plusieurs moulin(s) externe(s) (9a, 9b),
***caractérisé en ce que***
au moins un des moulins externes (9a, 9b), de préférence tous les moulins externes (9a, 9b), transmet/transmettent un ou plusieurs paramètres de broyage et/ou un ou plusieurs paramètres de préparation à un porte-filtre (4) de la machine à café (1) rempli, ou devant être rempli de mouture de café, dans ce moulin externe (9a, 9b), et
**en ce que** la machine à café (1) prend en charge ce(s) paramètres de broyage et/ou paramètres de préparation de ce porte-filtre rempli à partir de l'extérieur, de préférence le/les lit à partir de ce porte-filtre rempli à partir de l'extérieur et, au moyen de son dispositif de commande (6), réalise un processus de préparation en prenant en compte ce(s) paramètres de broyage et/ou paramètres de préparation.
